# FASCICULE DE BREVET EUROPEEN

(11) **EP 4 658 586 B1**
(45) Date de publication et mention de la délivrance du brevet: **04.11.2026**
(21) Numéro de dépôt: 24700765.1
(22) Date de dépôt: 12.01.2024
(51) Int. Cl.: B65G 43/08, B65G 47/52

(54) **INSTALLATION DE TRI DE COLIS ÉQUIPÉE D'UN DISPOSITIF D'INJECTION DE COLIS**
PAKETSORTIERANLAGE, DIE MIT EINER PAKETINJEKTIONSVORRICHTUNG AUSGESTATTET IST
PARCEL SORTING INSTALLATION EQUIPPED WITH A PARCEL INJECTION DEVICE

(30) Priorité: 31.01.2023 FR 2300895
(43) Date de publication de la demande: 10.12.2025
(73) Titulaire: Solystic, 92220 Bagneux (FR)
(72) Inventeur: BEAUGRAND, Wilfrid, 92227 Bagneux Cedex (FR); PAILLARD-BRUNET, Laurent, 92227 Bagneux Cedex (FR); REBOUL, Jean-Michel, 92227 Bagneux Cedex (FR)
(74) Mandataire: IP Trust
(86) Numéro de dépôt international: PCT/EP2024/050724
(87) Numéro de publication internationale: WO 2024/160515

(56) Documents cités:
- EP-A2- 0 305 755
- FR-A1- 2 182 148
- JP-A- 2000 185 817
- US-B1- 6 478 138

## Description

### Domaine Technique

L'invention se place dans le domaine du tri de colis ou paquets et concerne plus particulièrement les installations de tri de colis équipées de dispositifs d'injection de colis.

### Technique antérieure

La plupart des installations de tri de colis utilisent aujourd'hui des convoyeurs de tri capables de convoyer les colis en série et à vitesse très élevée. Ces installations de tri comprennent également des dispositifs d'injection de colis conçues pour injecter chaque colis dans un pas cible du convoyeur de tri, comme décrit dans les documents CN106269537, EP0305755, FR2182148 et US6478138. En particulier, le document EP0305755 divulgue une installation de tri de colis selon le préambule de la revendication 1.

Ce type de dispositif d'injection fonctionne systématiquement départ arrêté et impose un même cycle d'accélération à tous les colis.

Les dispositifs d'injection sont généralement semi-automatiques dans le sens où chaque cycle d'injection est déclenché automatiquement lorsque le colis est correctement positionné sur le convoyeur de transfert par un opérateur et qu'un pas cible disponible sur le convoyeur principal est à portée d'injection.

Toutefois, il est fréquent que des colis soient injectés en retard sur le convoyeur de tri, soit hors du pas cible soit à cheval entre deux pas, entraînant de fait un fort risque de rejet lors du tri de colis.

En effet, les colis de forme arrondie, inclinés ou mal équilibrés peuvent prendre du retard au démarrage, de même que les opérateurs peuvent les freiner involontairement au moment du démarrage du cycle d'injection.

De plus, plus les colis sont petits et plus ils se retrouvent décalés vers l'arrière du pas lors de leur injection.

Pour éviter de trop nombreux rejets, la solution privilégiée est aujourd'hui d'élargir les pas sur le convoyeur principal ce qui augmente son emprise au sol et/ou de réduire la vitesse du convoyeur principal ce qui diminue le débit de tri des colis.

### Résumé de l'invention

L'objectif de l'invention est donc de résoudre les problèmes précités.

A cet effet, l'invention a pour objet une installation de tri de colis comprenant un convoyeur principal pour colis conçu pour convoyer les colis en série, un convoyeur d'injection conçu pour injecter un colis sur le convoyeur principal, un convoyeur de transfert conçu pour transférer un colis sur le convoyeur d'injection, et une unité de contrôle-commande conçue pour commander le convoyeur de transfert et le convoyeur d'injection pour former des cycles d'injection de colis, chaque cycle d'injection se déroulant dans un temps de cycle prédéterminé permettant l'injection d'un colis courant dans un pas cible du convoyeur principal et débutant par une première phase d'accélération du colis courant sur le convoyeur de transfert d'une vitesse nulle à une vitesse de transfert, suivi d'une phase de convoyage du colis courant à la vitesse de transfert sur le convoyeur d'injection, suivi d'une seconde phase d'accélération du colis courant sur le convoyeur d'injection de la vitesse de transfert à une vitesse d'injection, caractérisée en ce que l'unité de contrôle-commande est paramétrée pour démarrer par anticipation d'un certain temps d'anticipation chaque cycle d'injection d'un colis courant, en ce que l'unité de contrôle-commande est paramétrée pour calculer un certain temps de retard pris par un colis courant sur le convoyeur de transfert par rapport à un colis de référence et pour retarder la seconde phase d'accélération du colis sur le convoyeur d'injection d'un certain temps d'ajustement d'au moins ledit temps de retard.

L'idée à la base de l'invention est de se donner du temps à chaque cycle d'injection pour gérer le retard éventuel d'un colis courant.

Le principe de l'invention consiste donc à déclencher le cycle d'injection en avance par rapport à un temps de déclenchement permettant l'injection d'un colis courant centré dans un pas cible, puis de déclencher en avance l'accélération du convoyeur d'injection si le colis a pris du retard sur le convoyeur de transfert de sorte que le colis courant puisse rattraper son retard et être injecté de manière centré dans son pas.

L'installation de tri selon l'invention peut également présenter les particularités suivantes :
- lorsque le temps de retard est supérieur à un temps seuil ne permettant plus d'insérer le colis courant dans le pas cible, l'unité de contrôle-commande commande en retour l'arrêt du convoyeur d'injection ;
- le temps de retard est calculé selon un premier moyen de calcul consistant à soustraire le temps que met le front arrière du colis de référence au temps que met le front arrière du colis courant pour se déplacer d'un point à l'amont du convoyeur de transfert jusqu'à un point à l'amont du convoyeur d'injection ;
- le temps de retard est calculé selon un second moyen de calcul consistant à soustraire le temps que met le centre géométrique du colis de référence au temps que met le centre géométrique du colis courant pour se déplacer d'un point à l'amont du convoyeur de transfert jusqu'à un point à l'amont du convoyeur d'injection ;
- le temps de retard est calculé en faisant la somme du premier moyen de calcul et du second moyen de calcul ;
- le temps d'ajustement est égal au temps d'anticipation moins le temps de retard..

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- [Fig.1] la figure 1 illustre de façon très schématique une installation de tri selon l'invention ;
- [Fig.2] la figure 2 illustre de façon très schématique une dispositif d'injection pour injecter des colis sur un convoyeur principal selon l'invention ;
- [Fig.3] la figure 3 illustre de façon très schématique un chronogramme d'un cycle d'injection selon l'invention pour un colis avec retard et un colis sans retard ;
- [Fig.4] la figure 4 illustre de façon très schématique la position des colis de la figure 3 par rapport aux pas d'un convoyeur principal selon l'invention ;
- [Fig.5] la figure 5 illustre de façon très schématique une cinétique de déplacement de plusieurs colis courant dans un cycle d'injection pendant laquelle une mesure de temps de retard desdits colis est réalisée ;
- [Fig.6] la figure 6 illustre de façon très schématique un chronogramme d'un cycle d'injection selon l'invention pour un colis en retard et pour lequel on effectue un rattrapage du retard ;
- [Fig.7] la figure 7 illustre de façon très schématique la position du colis de la figure 6 par rapport aux pas du convoyeur principal selon l'invention ;
- [Fig.8] la figure 8 illustre de façon très schématique une cinétique de déplacement d'un colis courant dans un cycle d'injection pendant laquelle une mesure du temps TB4 est réalisée;
- [Fig.9] la figure 9 illustre de façon très schématique une cinétique de déplacement d'un colis courant incliné dans un cycle d'injection pendant laquelle une mesure du temps TB4* est réalisée ;
- [Fig.10] la figure 10 illustre de façon très schématique un chronogramme d'un cycle d'injection selon l'invention d'un colis de petite taille pour lequel on effectue un rattrapage du retard ;
- [Fig.11] la figure 11 illustre de façon très schématique la position du colis de la figure 10 par rapport aux pas du convoyeur principal selon l'invention ;
- [Fig.12] la figure 12 illustre de façon très schématique un chronogramme d'un cycle d'injection selon l'invention d'un colis de petite taille et de forme arrondie pour lequel on effectue un rattrapage du retard ;
- [Fig.13] la figure 13 illustre de façon très schématique la position du colis de la figure 12 par rapport aux pas du convoyeur principal selon l'invention.

### Description d'un mode de réalisation

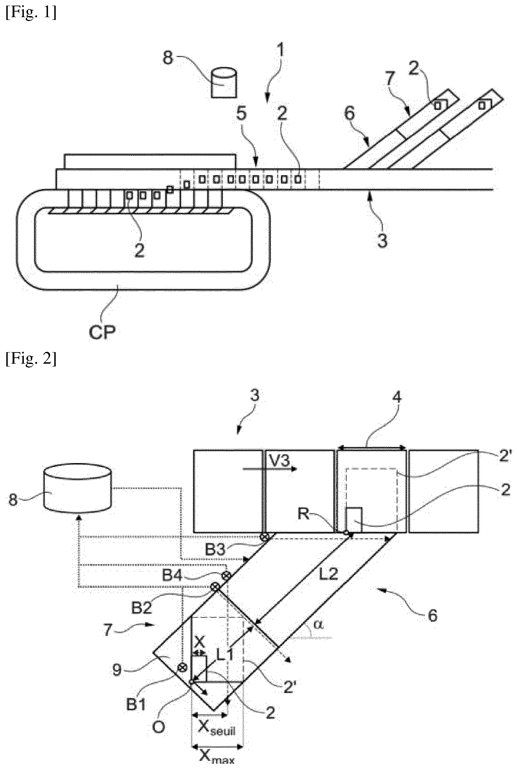

L'invention concerne une installation de tri 1 de colis 2, comme représenté sur la figure 1, destinée à équiper un centre de tri ou une plateforme logistique pour trier des colis 2 ou paquets hétérogènes et notamment des "Petits Paquets Internationaux" dits PPI.

L'installation de tri 1 de colis 2 selon l'invention comprend typiquement un convoyeur principal 3, ici un convoyeur d'alimentation en colis conçu pour convoyer les colis 2 en série et alimenter un convoyeur de tri CP en boucle équipé de sorties de tri.

Sans restreindre la portée de l'invention et comme simple alternative, le convoyeur principal 3 peut également se présenter sous la forme d'un convoyeur de tri.

Le convoyeur principal 3 peut être un convoyeur à bande dont les pas 5 sont virtuels ou physiquement identifiés, par exemple par des tasseaux ou des marquages, ou bien un convoyeur de réceptacles, par exemple des plateaux ou des godets, liés les uns aux autres.

L'installation de tri 1 selon l'invention comprend également un dispositif d'injection de colis conçu pour convoyer les colis un par un et les injecter sur le convoyeur principal, comme représenté sur la figure 2.

Le dispositif d'injection selon l'invention comprend un convoyeur d'injection 6 conçu pour injecter chaque colis 2 sur le convoyeur principal 3 et un convoyeur de transfert 7 conçu pour transférer chaque colis 2 sur le convoyeur d'injection 6.

L'installation de tri 1 comprend en outre une unité de contrôle-commande 8 conçue pour commander le convoyeur de transfert 7 et le convoyeur d'injection 6 pour former des cycles d'injection de colis 2.

Un cycle d'injection selon l'invention correspond à un déplacement d'un colis 2 courant sur le convoyeur de transfert 7 et le convoyeur d'injection 6 pendant un temps de cycle prédéterminé et permettant l'injection dudit colis 2 dans un pas cible du convoyeur principal 3. Chaque cycle d'injection débute par une première phase d'accélération du colis 2 courant sur le convoyeur de transfert 7 d'une vitesse nulle V0 à une vitesse de transfert V1, suivi d'une phase de convoyage du colis 2 courant à la vitesse de transfert V1 sur le convoyeur d'injection 6, suivi d'une seconde phase d'accélération du colis 2 courant sur le convoyeur d'injection 6 de la vitesse de transfert V1 à une vitesse d'injection V2.

L'unité de contrôle-commande 8 est également paramétrée pour contrôler l'accélération du convoyeur de transfert 7 et du convoyeur d'injection 6 de sorte qu'elle ne dépasse pas une valeur maximale tolérable au dessus de laquelle le risque de patinage des colis 2 est important.

Ainsi, à titre d'exemple nullement limitatif et dans le but d'avoir une emprise au sol limitée, le convoyeur de transfert 7 pourra être rectangulaire et de longueur L1 égale à la diagonale maximale des colis 2 pouvant être injectés dans un pas 5 tandis que le convoyeur d'injection 6 pourra être trapézoïdal avec une longueur L2 médiane égale à la diagonale maximale des colis 2 augmentée de la distance nécessaire pour accélérer le colis 2 courant de la vitesse de transfert V1 à la vitesse d'injection V2.

Le convoyeur de transfert 7 peut également être équipé d'un gabarit 9 de positionnement du colis 2 courant et des moyens de détection automatiques de la présence, de la taille et de la position dudit colis 2 courant sur le convoyeur de transfert 7 et sur le convoyeur d'injection 6.

Ainsi, le gabarit 9 permet, lorsque le convoyeur de transfert 7 est à l'arrêt, de discriminer les colis 2 trop grands Xmax, par exemple ici de largeur supérieure à 350mm, et de caler les colis 2 de la taille adéquat en mode portrait ou paysage.

La largeur X du colis 2 calé contre le gabarit 9 est alors sa dimension parallèle au convoyeur principal 3.

Les moyens de détection selon l'invention se présentent par exemple sous la forme de cellules photoélectriques, ici à titre d'exemple les cellules B1 à B4 :
B1 détecte la présence d'un colis 2 courant dans un coin O du gabarit 9 ;
B2 détecte le passage d'un colis 2 courant en sortie du convoyeur de transfert 7 ;
B3 détecte le passage d'un colis 2 courant en sortie du convoyeur d'injection 6 ;
B4 permet de discriminer les grands colis 2 des petits colis 2 (X > Xseuil).

Il arrive cependant que le colis 2 courant à injecter prenne du retard lors de la phase d'accélération du convoyeur de transfert 7 par rapport à un colis 2' de référence.

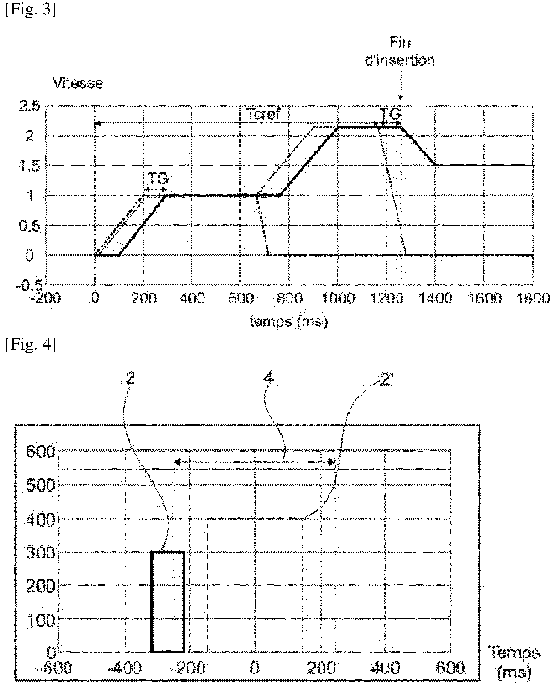

La figure 3 représente à ce propos un chronogramme d'un cycle d'injection avec en trait plein un colis 2 courant ayant pris un temps de retard au démarrage et en pointillé un colis 2' de référence sans retard. Le colis 2 en retard arrive à cheval entre deux pas du convoyeur de tri 3 alors que le colis 2' est injecté centré dans le pas 4, comme représenté sur la figure 4.

Par colis 2' de référence on entend un colis de taille maximum pouvant être acceptée par le gabarit 9. Le colis de référence permet également de définir un temps de cycle d'injection de référence Tcref, représenté sur la figure 3, permettant d'injecter le colis de référence de manière centré dans le pas 5, ainsi qu'un temps de déplacement du front arrière du colis de référence et un temps de déplacement du centre géométrique du colis de référence.

Les données relatives au colis 2' de référence sont ici des données numériques stockées en mémoire de l'unité de contrôle-commande 8.

L'unité de contrôle-commande 8 pourra ainsi être paramétrée pour calculer le temps de retard TG d'un colis 2 courant selon un premier moyen de calcul consistant à soustraire le temps Tref que met le front arrière d'un colis de référence au temps TB2 que met le front arrière dudit colis 2 courant pour se déplacer d'un point à l'amont du convoyeur de transfert 7 jusqu'à un point à l'amont du convoyeur d'injection 6.

Ce premier moyen de calcul permet ici d'identifier un retard du colis 2 courant par rapport au colis de référence, par exemple dû à une forme arrondie, un mauvais positionnement, un mauvais équilibre du colis 2 courant ou bien encore lorsqu'un opérateur retient involontairement le colis 2 courant.

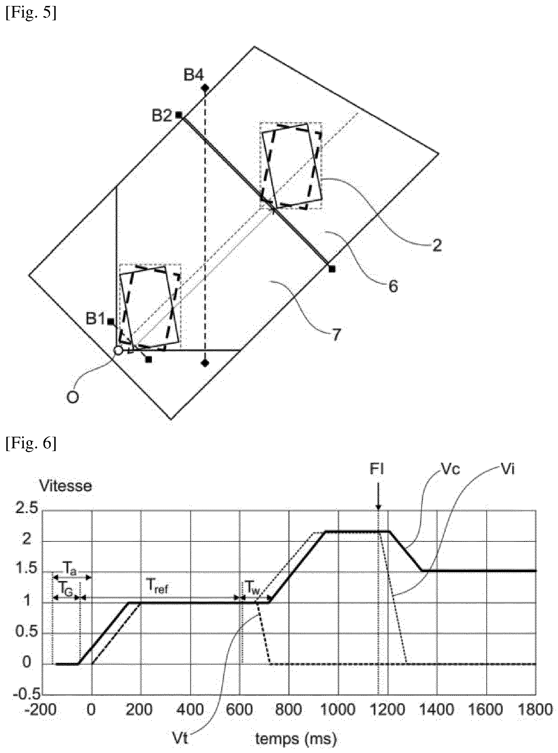

La figure 5 permet d'imager la cinétique de déplacement du front arrière d'un colis 2 courant pour atteindre le convoyeur d'injection 6 selon son positionnement contre le gabarit et/ou sa taille.

L'unité de contrôle-commande 8 pourra également être paramétrée pour calculer le temps de retard TG dudit colis 2 courant selon un second moyen de calcul consistant à soustraire le temps que met le centre géométrique du colis de référence au temps que met le centre géométrique du colis 2 courant pour se déplacer d'un point à l'amont du convoyeur de transfert 7 jusqu'à un point à l'amont du convoyeur d'injection 6.

Le second moyen de calcul permet ainsi d'identifier un retard du colis 2 courant à partir de sa taille mesurée ou estimée. En effet, la différence de temps mis par les centres géométriques des colis pour traverser le convoyeur de transfert 7 permet d'en déduire une différence de taille. Or, plus la taille du colis 2 courant sera petite par rapport au colis de référence et plus le colis 2 courant se retrouvera décalé vers l'arrière du pas 5 lors de son injection.

Les mesures de temps de déplacement du front arrière ou du centre géométrique des colis 2 courant pourront être effectuées à l'aide des moyens de détection selon l'invention.

Aussi, afin de se donner les moyens de corriger les retards éventuels des colis 2 courant pris sur le convoyeur de transfert 7, l'unité de contrôle-commande 8 est paramétrée pour démarrer par anticipation d'un certain temps d'anticipation Ta chaque cycle d'injection d'un colis 2 courant.

Le temps d'anticipation Ta pourra être de durée fixe et répétée systématiquement dans tous les cycles d'injection.

L'unité de contrôle-commande 8 sera alors paramétrée pour retarder la phase d'accélération du convoyeur d'injection 6 d'un certain temps d'ajustement Tw compensant au moins (Ta-TG).

Tw est ici supérieur à (Ta - TG) puisque les convoyeurs ne sont pas arrêtés pendant le cycle d'injection et que par conséquent le colis continue d'avancer à V1 : ${T}_{w} = \left({T}_{a}-TG\right) / \left(1-V1/V2\right)$

De manière avantageuse, lorsque le temps de retard TG sera supérieur à un temps seuil TS ne permettant plus d'insérer le colis courant dans le pas cible, l'unité de contrôle-commande pourra être paramétrée pour commander en retour l'arrêt du convoyeur d'injection 6.

Ainsi, que ce soit à partir du premier mode de calcul ou du second mode de calcul, chaque cycle d'injection de colis est systématiquement anticipé d'un temps d'anticipation Ta tandis que la seconde phase d'accélération du convoyeur d'injection 6 est plus ou moins retardé d'une durée Tw qui est calculée en fonction du temps de retard TG.

L'unité de contrôle-commande 8 pourra avantageusement être paramétrée pour calculer le temps de retard TG en faisant la somme du premier moyen de calcul et du second moyen de calcul afin d'améliorer le rattrapage du retard du colis 2 courant.

En outre, si le colis 2 courant ne présente pas de temps de retard en sortie du convoyeur de transfert 7, l'unité de contrôle commande pourra être paramétrée pour retarder la phase d'accélération du convoyeur d'injection du temps d'anticipation Ta.

### Exemple d'injection d'un colis en retard du fait de sa forme arrondie:

On calcule un retard TG pris par un colis 2 courant de forme arrondie durant son trajet sur le convoyeur de transfert 7 en calculant une différence entre le temps TB2 mis par le front arrière du colis 2 courant pour sortir du convoyeur de transfert 7, (c'est-à-dire pour aller du point à l'amont du convoyeur de transfert 7 jusqu'au point à l'amont du convoyeur d'injection 6, grâce à la détection par les cellules B1 et B2) depuis l'activation du cycle d'injection déclenchée lorsque le centre du pas cible sur le convoyeur principal se trouve à la distance V*Tcref en amont l'axe médian du convoyeur d'injection (V étant la vitesse du convoyeur principal), et la durée théorique Tref de traversée du convoyeur de transfert 7 par le front arrière d'un colis 2' de référence déterminée suivant : $Tref = V 1 / A + L 1 / V 1$ (où A est l'accélération, V1 la vitesse de transfert et L1 la longueur du convoyeur de transfert)

En revanche, on comprendra que si aucun retard du colis 2 courant n'est détecté, le délai TB2 correspondra alors au temps mis par ledit colis 2 courant pour parcourir la distance L depuis l'activation de la phase d'accélération du convoyeur de transfert 7 (c'est-à-dire pour aller du point à l'amont du convoyeur de transfert 7 jusqu'au point à l'amont du convoyeur d'injection 6, grâce à la détection par les cellules B1 et B2).

Par ailleurs, un colis 2 courant qui sortirait en avance du convoyeur de transfert 7 (soit parce qu'il n'a pas été bien calé contre le gabarit, soit parce qu'il a pivoté ou bien encore du fait d'une détection imprécise) n'entraînerait pas un démarrage immédiat de l'accélération du convoyeur d'injection 6, qui ne doit pas intervenir avant la fin de la phase d'accélération du convoyeur de transfert 7. $TG = Max \left[0 ; TB2-Tref\right]$

Ainsi, pour compenser le retard TG, la seconde phase d'accélération du convoyeur d'injection 6 ayant été anticipée du temps d'anticipation Ta, il convient de retarder l'arrivée du colis 2 en fin du convoyeur d'injection 6 de la durée (Ta - TG). Le retard maximal compensable est donc Ta.

Toutefois, le convoyeur d'injection 6 reçoit le colis à la vitesse de transfert et le maintient à cette vitesse jusqu'à la phase d'accélération du convoyeur d'injection 6.

L'unité de contrôle-commande 8 pourra dans ce cas être paramétrée pour retarder l'accélération du convoyeur d'injection 6 d'une durée Tw supérieure à (Ta - TG) : $Tw = \left(Ta-TG\right) / \left(1-V1/V2\right) = \left(Ta-TG\right) / CRw$

Par exemple, pour V1=1 m/s et V2 = 2.16 m/s, le facteur 1/CRw est voisin de 1.9
CRw est un coefficient qui intervient dans le calcul de Tw aussi bien pour un colis arrondi ou freiné que pour un colis de petite taille : CRw = 1 - V2/V1
La valeur maximale de Tw est ici limitée par la longueur L2 du convoyeur d'injection 6 car il convient que le colis 2 courant (ou a minima son centre) ait quasiment acquis la vitesse d'injection lorsqu'il atteint le convoyeur principal 3.

En pratique, la valeur du retard maximal compensable (donc de Ta) est de l'ordre de 150 ms, ce qui représente une capacité de correction significative dans le pas (230 mm pour une vitesse du convoyeur principal V=1.53 m/s.

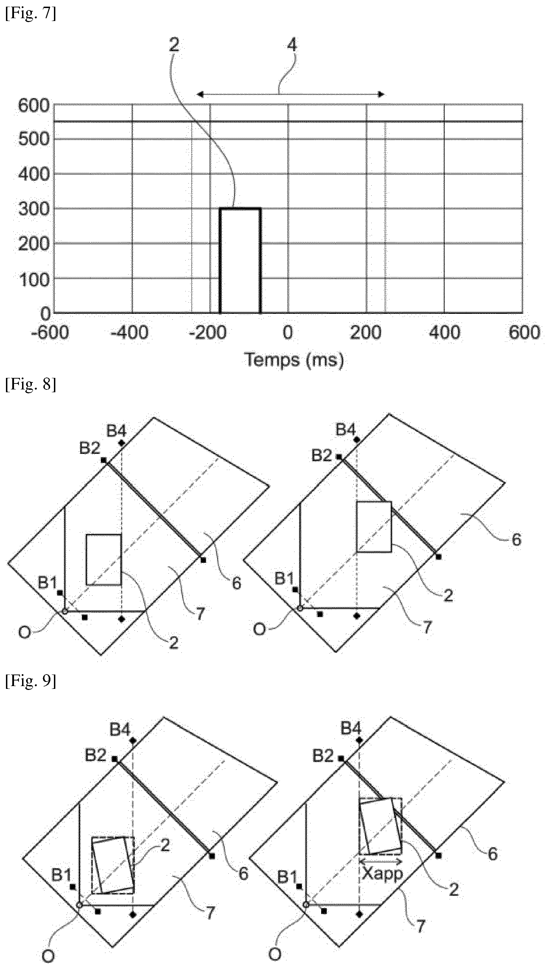

Le chronogramme de la figure 6 montre la vitesse Vt du convoyeur de transfert 7 et la vitesse Vi du convoyeur d'injection 6 dans un cycle standard d'insertion de colis se terminant à Fi et montre à titre d'exemple la vitesse Vc d'un colis 2 courant ayant pris du retard, ici représenté en trait plein. Le retard pris par le colis 2 courant sur le convoyeur de transfert est ici compensé grâce au déclenchement retardé de l'accélération du convoyeur d'injection 6 à la fin de Tw. Le colis 2 courant est ainsi parfaitement calé avec l'arrivée du pas 5, comme représenté en figure 7.

Le colis 2 courant arrive donc au même endroit sur le convoyeur principal 3 et ne sort pas du pas 5.

### Exemple d'injection d'un colis en retard du fait de sa petite taille :

Il a été constaté qu'un colis 2 courant de largeur X inférieure à la largeur maximale Xmax (dans l'exemple selon l'invention Xmax=350mm) qui suivait parfaitement le cycle d'injection sans prendre de retard dans le sens du premier mode de calcul, se trouvait décalé sur l'arrière du pas 5 d'une certaine durée Tmes : $Tmes = \left(Xmax-X\right) / 2$

La mesure ou l'estimation de la largeur du colis 2 courant par rapport au colis de largeur maximale Xmax revient ici à considérer le centre géométrique dudit colis 2 courant par rapport au centre géométrique dudit colis Xmax, centre géométrique qui doit être centré dans le pas 5 cible.

Le décalage du colis 2 courant dans le pas 5 revient donc à déterminer la différence de temps entre les centres géométriques des colis courant et colis de référence sur le convoyeur de transfert 7, c'est-à-dire Tmes.

L'unité de contrôle-commande 8 selon l'invention permet ainsi de compenser ce temps retard, en avançant l'arrivée du colis 2 en fin du convoyeur d'injection 6 de la durée : $0.5 \left(Xmax-X\right) / V$

Le cycle d'injection ayant été anticipé du temps d'anticipation Ta, il convient de retarder la phase d'accélération du convoyeur d'injection 6 d'une durée Tw: 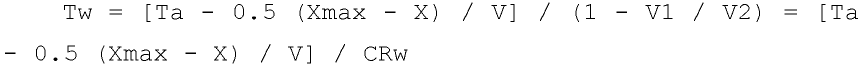 Tw = [Ta - 0.5 (Xmax - X) / V] / (1 - V1 / V2) = [Ta - 0.5 (Xmax - X) / V] / CRw

Toutefois, la largeur du colis 2 courant déposé sur le convoyeur de transfert 7 n'étant pas connue à l'avance et étant très variable d'un colis à l'autre, il convient de mesurer ou estimer cette largeur au plus tard lorsque le colis 2 courant sort du convoyeur de transfert 7.

L'installation de tri 1 selon l'invention pourra dans ce cas être équipée d'un capteur optique (caméra ou laser) placée au-dessus du convoyeur de transfert 7 pour mesurer les dimensions du colis 2 courant à l'arrêt sur le convoyeur de transfert 7, d'un rideau de cellules de détection de présence le long du gabarit pour estimer la largeur du colis courant ou bien utiliser les cellules existantes telle que la cellule B4 chargée de discriminer les grands colis des petits (> ou < au seuil Xseuil typiquement de l'ordre de 250 mm).

Ainsi, lorsque la cellule B4 est occultée au départ par un colis 2 courant de largeur > Xseuil, mais inférieure à Xmax, on comprend que la largeur X du colis ne peut pas être estimée. Cela impose d'appliquer une faible avance forfaitaire (typiquement 30 mm).

Lorsque la cellule B4 est occultée au départ par un colis 2 courant de largeur < Xseuil, la largeur apparente Xapp du colis 2 courant peut être estimée de la manière suivante :
- enregistrer un délai TB4 entre le démarrage de la phase d'accélération du convoyeur de transfert 7 et l'occultation de la cellule B4,
- enregistrer le délai TB4* entre le démarrage de la phase d'accélération du convoyeur de transfert 7 et la dés-occultation de B4,
- et
   si TB4 ≥ T1 (=V1/A durée d'accélération du convoyeur 1) alors : $Xapp = \left(TB4*-TB4\right) V 1 cosα$ ou
   si TB4 < T1 alors : 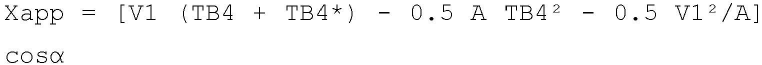 Xapp = [V1 (TB4 + TB4*) - 0.5 A TB42 - 0.5 V12/A] cosα

La figure 8 représente à ce titre la détermination du délai TB4 dans le cas d'un colis 2 courant non incliné alors que la figure 9 représente la détermination du délai TB4* dans le cas d'un colis 2 courant incliné.

Dans le cas d'un colis incliné c'est bien la largeur apparente Xapp du colis 2 courant qui est estimée et qui est effectivement la grandeur à mesurer car c'est cette largeur que le colis 2 courant occupera in fine sur le convoyeur principal 3.

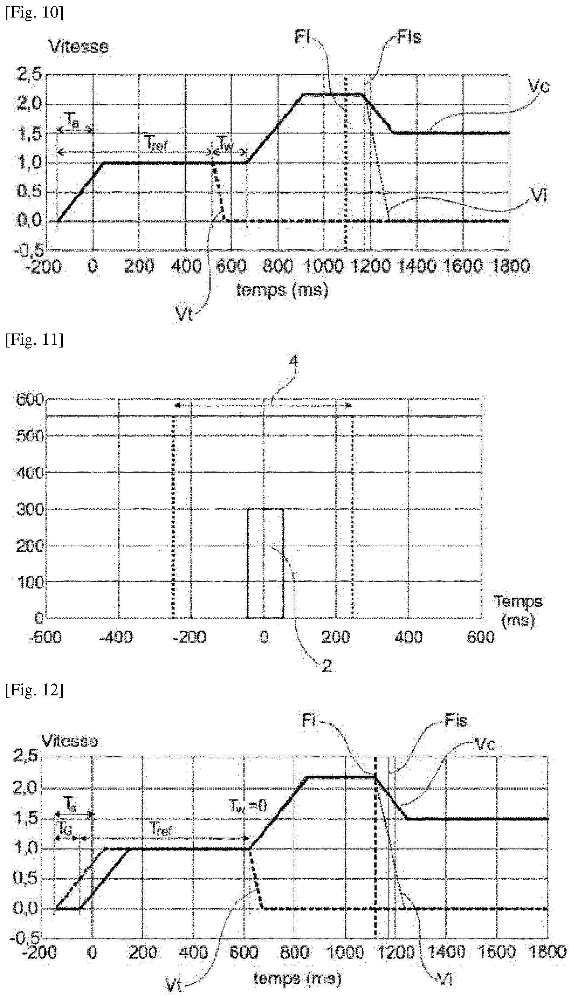

La figure 10 représente le chronogramme d'un cycle d'injection avec centrage d'un colis 2 courant d'une largeur de 100 mm. L'injection du colis 2 courant au temps FI (fin d'insertion du colis courant) sur le convoyeur principal 3 est avancée par rapport à l"injection du colis 2' de référence pour recentrer le colis 2 courant dans son pas 5, comme représenté sur la figure 11.

A noter que la mesure de la largeur apparente Xapp reste valable même si le colis 2 courant n'a pas été parfaitement placé contre le gabarit (coin arrière du colis plus ou moins distant du point O).

### Exemple d'injection d'un colis en retard sans acquisition en dynamique

Si l'acquisition dynamique de la cellule B4 ou le traitement en temps réel de cette information pose problème, il est possible d'envisager une stratégie dégradée consistant à imposer forfaitairement une avance systématique DA0 aux grands colis (X ≥ Xseuil) et une avance DA1 plus importante aux petits colis (X < Xseuil).

Les valeurs DA0 et DA1 sont déterminées de façon empirique ou par simulation pour obtenir le meilleur compromis compte tenu de la distribution dimensionnelle des colis à traiter.

### Exemple d'injection d'un colis en retard cumulant forme arrondie et petite taille

Les stratégies décrites ci-avant sont cumulables dans la limite de la capacité d'avance Ta.

Si le retard TG et la largeur apparente Xapp sont constatées en sortie du convoyeur de transfert 7, le retard globale à imposer est : $Tw = \left[Ta-TG-0.5\left(Xmax-Xapp\right)/V\right] / CRw$

A noter que [TG + 0.5 (Xmax - Xapp) / V] est borné entre 0 et Ta. Un trop grand retard d'un colis 2 de faible largeur ne pourra donc être compensé que partiellement.

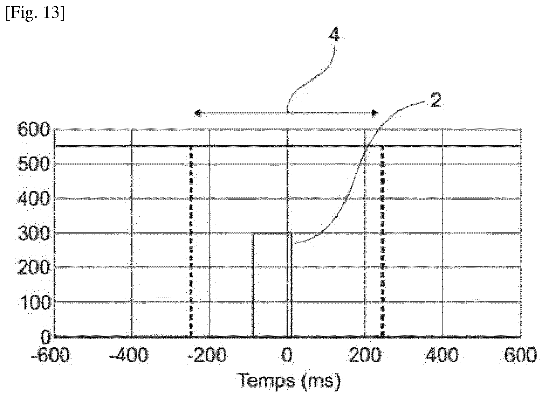

A titre d'exemple, la figure 12 montre une injection sur le convoyeur principal 3 d'un colis 2 courant d'une largeur de 100 mm avec un retard de 100 ms. La phase d'accélération est avancée mais la limite de capacité de correction est atteinte (Tw = 0) et le colis 2 courant n'est pas parfaitement centré dans son pas (cf. figure 13). Plus précisément, le colis arrive dans le pas à FI (fin d'insertion du colis courant) alors que le colis de référence arrive dans le pas à Fis (fin d'insertion du colis 2' de référence).

## Revendications

1. Installation de tri (1) de colis (2) comprenant un convoyeur principal (3) pour colis conçu pour convoyer les colis en série, un convoyeur d'injection (6) conçu pour injecter un colis sur le convoyeur principal, un convoyeur de transfert (7) conçu pour transférer un colis sur le convoyeur d'injection, et une unité de contrôle-commande (8) conçue pour commander le convoyeur de transfert et le convoyeur d'injection pour former des cycles d'injection de colis, chaque cycle d'injection se déroulant dans un temps de cycle prédéterminé permettant l'injection d'un colis courant dans un pas (5) cible du convoyeur principal et débutant par une première phase d'accélération du colis courant sur le convoyeur de transfert d'une vitesse nulle à une vitesse de transfert, suivi d'une phase de convoyage du colis courant à la vitesse de transfert sur le convoyeur d'injection, suivi d'une seconde phase d'accélération du colis courant sur le convoyeur d'injection de la vitesse de transfert à une vitesse d'injection, **caractérisée en ce que** l'unité de contrôle-commande est paramétrée pour démarrer par anticipation d'un certain temps d'anticipation Ta chaque cycle d'injection d'un colis courant, **en ce que** l'unité de contrôle-commande est paramétrée pour calculer un certain temps de retard TG pris par un colis courant sur le convoyeur de transfert par rapport à un colis de référence et pour retarder la seconde phase d'accélération du colis sur le convoyeur d'injection d'un certain temps d'ajustement d'au moins ledit temps de retard.

2. Installation de tri de colis selon la revendication 1, **caractérisée en ce que** lorsque le temps de retard est supérieur à un temps seuil TS ne permettant plus d'insérer le colis courant dans le pas cible, l'unité de contrôle-commande commande en retour l'arrêt du convoyeur d'injection.

3. Installation de tri de colis selon la revendication 1 ou 2, **caractérisée en ce que** le temps de retard TG est calculé selon un premier moyen de calcul consistant à soustraire le temps Tref que met le front arrière du colis de référence au temps TB2 que met le front arrière du colis courant pour se déplacer d'un point à l'amont du convoyeur de transfert jusqu'à un point à l'amont du convoyeur d'injection.

4. Installation de tri de colis selon la revendication 1 ou 2, **caractérisée en ce que** le temps de retard est calculé selon un second moyen de calcul consistant à soustraire le temps que met le centre géométrique du colis de référence au temps que met le centre géométrique du colis courant pour se déplacer d'un point à l'amont du convoyeur de transfert jusqu'à un point à l'amont du convoyeur d'injection.

5. Installation de tri de colis selon la revendication 3 et 4, **caractérisée en ce que** le temps de retard est calculé en faisant la somme du premier moyen de calcul et du second moyen de calcul.

6. Installation de tri de colis selon l'une quelconque des revendications précédentes, **caractérisée en ce que** le temps d'ajustement est égal au temps d'anticipation moins le temps de retard.

## Patentansprüche

1. Sortieranlage (1) für Packstücke (2), umfassend einen Hauptförderer (3) für Packstücke, der zum Befördern der Packstücke in Reihe konzipiert ist, einen Einschleusförderer (6), der zum Einschleusen eines Packstücks auf den Hauptförderer konzipiert ist, einen Transferförderer (7), der zum Transferieren eines Packstücks auf den Einschleusförderer konzipiert ist, und eine Steuer- und Regeleinheit (8), die zum Regeln des Transferförderers und des Einschleusförderers zum Ausbilden von Packstückeinschleuszyklen konzipiert ist, wobei jeder Einschleuszyklus in einer vorbestimmten Zykluszeit abläuft, die das Einschleusen eines aktuellen Packstücks auf eine Zielstelle (5) des Hauptförderers ermöglicht, und mit einer ersten Beschleunigungsphase des aktuellen Packstücks auf dem Transferförderer von einer Geschwindigkeit von null auf eine Transfergeschwindigkeit beginnt, gefolgt von einer Förderungsphase des aktuellen Packstücks mit der Transfergeschwindigkeit auf dem Einschleusförderer, gefolgt von einer zweiten Beschleunigungsphase des aktuellen Packstücks auf dem Einschleusförderer von der Transfergeschwindigkeit auf eine Einschleusgeschwindigkeit, **dadurch gekennzeichnet, dass** die Steuer- und Regeleinheit zum Starten mit Vorlauf mit einer gewissen Vorlaufzeit Ta jedes Einschleuszyklus eines aktuellen Packstücks parametriert ist, **dadurch, dass** die Steuer- und Regeleinheit zum Berechnen einer gewissen Verzögerungszeit TG, die durch ein aktuelles Packstück auf dem Transferförderer relativ zu einem Referenzpackstück beansprucht wird, und zum Verzögern der zweiten Beschleunigungsphase des Packstücks auf dem Einschleusförderer um eine gewisse Anpassungszeit von mindestens der Verzögerungszeit, parametriert ist.

2. Sortieranlage für Packstücke nach Anspruch 1, **dadurch gekennzeichnet, dass** wenn die Verzögerungszeit größer als eine Schwellenzeit TS ist, die ein Einfügen des aktuellen Packstücks auf die Zielstelle nicht mehr zulässt, die Steuer- und Regeleinheit im Gegenzug das Anhalten des Einschleusförderers regelt.

3. Sortieranlage für Packstücke nach Anspruch 1 oder 2, **dadurch gekennzeichnet, dass** die Verzögerungszeit TG gemäß einem ersten Berechnungsmittel berechnet wird, das darin besteht, die Zeit Tref, die die Hinterkante des Referenzpackstücks benötigt, von der Zeit TB2 zu subtrahieren, die die Hinterkante des aktuellen Packstücks benötigt, um sich von einem stromaufwärtigen Punkt des Transferförderers bis zu einem stromaufwärtigen Punkt des Einschleusförderers zu bewegen.

4. Sortieranlage für Packstücke nach Anspruch 1 oder 2, **dadurch gekennzeichnet, dass** die Verzögerungszeit gemäß einem zweiten Berechnungsmittel berechnet wird, das darin besteht, die Zeit, die der geometrische Mittelpunkt des Referenzpackstücks benötigt, von der Zeit zu subtrahieren, die der geometrische Mittelpunkt des aktuellen Packstücks benötigt, um sich von einem stromaufwärtigen Punkt des Transferförderers bis zu einem stromaufwärtigen Punkt des Einschleusförderers zu bewegen.

5. Sortieranlage für Packstücke nach Anspruch 3 und 4, **dadurch gekennzeichnet, dass** die Verzögerungszeit als Summe des ersten Berechnungsmittels und des zweiten Berechnungsmittels berechnet wird.

6. Sortieranlage für Packstücke nach einem der vorstehenden Ansprüche, **dadurch gekennzeichnet, dass** die Anpassungszeit gleich der Vorlaufzeit minus der Verzögerungszeit ist.

## Claims

1. A parcel sorting installation (1) comprising a main conveyor (3) for parcels (2) configured to convey the parcels in series, an injection conveyor (6) configured to inject a parcel onto the main conveyor, a transfer conveyor (7) configured to transfer a parcel onto the injection conveyor, and a control unit (8) configured to control the transfer conveyor and the injection conveyor so as to form parcel injection cycles, each injection cycle taking place within a predetermined cycle time allowing a current parcel to be injected into a target pitch (5) of the main conveyor and beginning with a first phase of acceleration of the current parcel on the transfer conveyor from zero speed to a transfer speed, followed by a phase of conveying the current parcel at the transfer speed on the injection conveyor, followed by a second phase of acceleration of the current parcel on the injection conveyor from the transfer speed to an injection speed, **characterized in that** the control unit is configured to start each injection cycle of a current parcel in advance by a certain anticipation time Ta, **in that** the control unit is configured to calculate a certain delay time TG incurred by a current parcel on the transfer conveyor relative to a reference parcel and to delay the second phase of acceleration of the parcel on the injection conveyor by a certain adjustment time at least equal to the delay time.

2. The parcel sorting installation according to claim 1, **characterized in that**, when the delay time is greater than a threshold time TS beyond which the current parcel can no longer be inserted into the target pitch, the control unit commands, in response, stopping of the injection conveyor.

3. The parcel sorting installation according to claim 1 or 2, **characterized in that** the delay time TG is calculated according to a first calculation method consisting in subtracting the time Tref taken by the trailing edge of the reference parcel to travel from a point upstream of the transfer conveyor to a point upstream of the injection conveyor from the time TB2 taken by the trailing edge of the current parcel to travel from a point upstream of the transfer conveyor to a point upstream of the injection conveyor.

4. The parcel sorting installation according to claim 1 or 2, **characterized in that** the delay time is calculated according to a second calculation method consisting in subtracting the time taken by the geometric center of the reference parcel to travel from a point upstream of the transfer conveyor to a point upstream of the injection conveyor from the time taken by the geometric center of the current parcel to travel from a point upstream of the transfer conveyor to a point upstream of the injection conveyor.

5. The parcel sorting installation according to claims 3 and 4, **characterized in that** the delay time is calculated as the sum of the first calculation method and the second calculation method.

6. The parcel sorting installation according to any one of the preceding claims, **characterized in that** the adjustment time is equal to the anticipation time minus the delay time.
